(19) Europäisches Patentamt
European Patent Office
Office européen des brevets

(11) Publication number: 0 061 924
B1

(12) **EUROPEAN PATENT SPECIFICATION**

(45) Date of publication of patent specification: **30.01.85**

(51) Int. Cl.[4]: **B 01 J 20/32,** B 01 J 45/00

(21) Application number: **82301657.1**

(22) Date of filing: **30.03.82**

(54) **Metal ion adsorbent and process for preparing the same.**

(30) Priority: **31.03.81 JP 46482/81**

(43) Date of publication of application:
**06.10.82 Bulletin 82/40**

(45) Publication of the grant of the patent:
**30.01.85 Bulletin 85/05**

(84) Designated Contracting States:
**DE FR GB SE**

(56) References cited:
**US-A-4 222 892**
**US-A-4 241 028**

**CHEMICAL ABSTRACTS, vol. 88, no. 12, 20th March 1978, page 16, no. 74760m, Columbus Ohio (USA); E. VERNON: "The preparation and properties of chelating ion exchange resions"**

**CHEMICAL ABSTRACTS, vol. 93, no. 4, July 1980, page 299, no. 31362u, Columbus Ohio (USA).**

(73) Proprietor: **Hitachi, Ltd.**
**5-1, Marunouchi 1-chome**
**Chiyoda-ku Tokyo 100 (JP)**

(72) Inventor: **Motojima, Kenji**
**2368-2 Senbacho**
**Mito-shi (JP)**

(74) Representative: **Paget, Hugh Charles Edward et al**
**MEWBURN ELLIS & CO. 2/3 Cursitor Street**
**London EC4A 1BQ (GB)**

**EP 0 061 924 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a metal ion adsorbent and a process for preparing the same, and particularly to a metal ion adsorbent useful in a purification system for nuclear reactor coolant, particularly suitable for purifying high temperature cooling water, and a process for preparing the same.

A boiling water type nuclear reactor has a purification system for nuclear reactor coolant for purifying the cooling water in the nuclear reactor pressure vessel. The purification system for the nuclear reactor coolant has a filtration-demineralization apparatus comprising precoated powder ion exchange resin, and further has both a regenerating heat exchanger and a non-regenerating heat exchanger. Coolant, after being cooled by passage through the said individual heat exchangers, flows into the filtration-demineralization apparatus, which is back-washed with a frequency of about two weeks, generating a large amount of used powdery ion exchange resin as a radioactive waste. To reduce the amount of this radioactive waste and also to adsorb radioactive substances, it has been proposed to use oxine-impregnated activated carbon. Above 150°C, oxine is gradually released from the oxine-impregnated activated carbon, and this release is accelerated at a higher temperature, resulting in reduced power to adsorb, so that it is impossible to use this material above 150°C. On the other hand, the cooling water in a nuclear reactor pressure vessel is at a temperature as high as about 280°C, and thus development of a powerful oxine-impregnated activated carbon having a high adsorbability even at a higher temperature has been much desired.

SUMMARY OF THE INVENTION

An object of the present invention is to provide a metal ion adsorbent capable of purifying a coolant at a higher temperature and a process for preparing the same.

The present invention provides a process for preparing a metal ion adsorbent, which comprises adsorbing oxine or an oxine derivative onto activated carbon, and then subjecting the oxine or its derivative on the surface of the activated carbon to polymerization. As will be explained below, polymerization here includes copolymerization with other material.

Preferably the process includes hydroxymethylating the oxine or its derivative on the surface of the activated carbon, before subjecting the hydroxymethylated oxine or derivative to the polymerization.

The present invention further provides a metal ion adsorbent which comprises activated carbon and a polymerization product of oxine or an oxine derivative on the surface of the activated carbon. The polymerization product may be a copolymerization product of oxine or its derivative and a phenol.

Examples of the invention will be described below by way of example with reference to the drawings:

Fig. 1 is a diagram illustrating the stability of various metal ion adsorbents at high temperature, measured by the oxine concentration of the effluent water,

Fig. 2 is a diagram showing the distribution of radioactive cobalt along absorbent columns filled with various metal ion adsorbents,

Fig. 3 is a diagram showing the thermo-analytical curves of activated carbon, oxine impregnated carbon and synthetic adsorbents Curves I are thermo-gravimetric and curves II are differential thermal curves.

Fig. 4 is a flow diagram showing a purification system of a boiling water type nuclear reactor using a metal ion adsorbent according to the present invention,

Fig. 5 is a cross-sectional view showing one embodiment of a purifier using a metal ion adsorbent according to the present invention.

DETAILED DESCRIPTION OF THE PREFERRED EMBODIMENT

The present invention has been arrived at as a result of extensive study of the adsorbability of oxine-impregnated activated carbon in high temperature cooling water, which will be described below.

At a water temperature above 150°C, oxine is gradually released from an oxine-impregnated activated carbon in which the oxine is merely adsorbed onto the activated carbon, resulting in reduced adsorbability, so that it is difficult to use this oxine-impregnated activated carbon at a temperature above 150°C, as described above.

If oxine could be converted to a more insoluble compound still having a functional group capable of forming chelates by a chemical treatment of the oxine adsorbed on the activated carbon, an ion adsorbent useful at high temperature might be available. On the basis of this thinking, the present inventor succeeded in synthesizing an adsorbent for heavy metal ions such as cobalt, etc., and which can be stable up to about 300°C, by polymerizing oxine or a derivative thereof, for instance directly or by copolymerizing it with a phenol.

Oxine has the following structure:

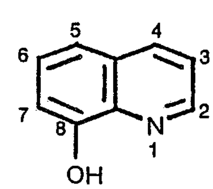

(1)

The functional group through which the oxine forms a chelate compound with many species of metal ions is located at the following part:

$$\overset{1}{=N}-C-\underset{\substack{| \\ OH}}{\overset{8}{C}}=C \qquad (2)$$

Many oxine derivatives having halogen atoms, alkyl groups, phenyl groups, sulfonic groups, nitroso groups, nitro groups, amino groups, hydroxyl groups etc. at positions 2—7 of formula (1) are available through synthesis.

Positions 5 and 7 of oxine (see Formula (1)) correspond to the para position and the ortho position of phenol, respectively, and thus are chemically active and hydroxymethylated oxine by easy addition of formaldehyde as in the case of phenol. Polymers of oxine can be prepared by binding through methyl, ethyl or ethereal bondage. If there is a phenol or a phenol derivative in the reaction system, oxine can form copolymers therewith. By quite similar reaction to the synthesis of phenol resin can polymers or condensates of oxine or copolymers of oxine with resinol be formed. These materials can capture heavy metal ions by chelating, and are also stable in the air up to about 270°C. The said polymers and copolymers are covered by the term "polymer" in a wide sense. However, the adsorbability of these polymers and condensates in a resinous state are greatly reduced, as compared with the chemical equivalent of the oxine used in the polymerization, and the polymers in a resinous state are disintegrated by repeated swelling and shrinkage and cannot be used in high temperature water in a continued manner for a long time.

The present inventor has successfully prepared a heavy metal ion adsorbent having a high adsorbing efficiency for heavy metal ions, e.g. metal ions of Cd, Co, Ni, Pb, Zn, etc. and which is very stable even in high temperature water, by synthesis, while dispersing these chelating polymers into pores of chemically and mechanically stable activated carbon. The present adsorbent can be applied directly to the purification system of a nuclear reactor at a high temperature. Another advantage of the present adsorbent is that the present adsorbent having adsorbed radioactive nuclear species can be readily combusted to ash at a lower temperature such as 700°C without scattering the radioactive nuclear species, thereby reducing the volume of radioactive waste to a considerable degree. This is very important for radioactive waste disposal.

An outline of a process for preparing a metal ion adsorbent according to the present invention will be described below.

Up to about 35% by weight (on the basis of the activated carbon) of oxine is deposited onto activated carbon of any form, for example granular form, disintegrated form or powdery form, and then heated to form polymers of oxime in the pores of the activated carbon. After the deposition of oxine, the resulting activated carbon may be dipped into a solution of aldehyde, for example, an aqueous solution of formaldehyde or acetaldehyde to hydroxymethylate the oxine in the presence of an acid or an alkali as a reaction promoter, and then the resulting activated carbon may be heated to form polymerised oxine. Alternatively, the oxine may be hydroxymethylated before being adsorbed onto the activated carbon, and after adsorption subjected to the polymerization reaction. Furthermore, in the polymerization reaction, it is very effective to add an appropriate amount of phenol, for example, phenol or resorcinol to the oxine to form copolymers of the oxine and the phenol. In these reactions, it is possible to use an oxine derivative such as 2-methyl oxine alone in place of oxine or together with oxine. It is also possible to use an aldehyde source such as hexamethylenetetramine in place of the aldehyde, and very versatile procedures are available for this purpose as in the preparation of a phenol resin.

Examples of the preparation of metal ion adsorbents will be described in detail below.

Example 1

200 g of activated carbon prepared from coconut shells (disintegrated form of 24—42 mesh) were placed into an Erlenmeyer flask with ground stopper, and 40 g of purified powdery oxine was added thereto. The flask was shaken gently to adsorb the oxine onto the activated carbon. About 10 minutes after the shaking, almost all of the oxine was adsorbed onto the activated carbon, and the flask was then left standing for about 3 hours for aging. Then, 6.7 g of powdery resorcinol was added, and the flask was shaken for about 30 minutes to adsorb the resorcinol onto the activated carbon. Then, 25 ml of an aqueous 37% solution to formaldehyde was added, and the flask was shaken to obtain a uniform mixture. Then, 15 ml of formic acid was added, and gently mixed at 80°C for about 1 hour. Aging was carried out at 80°C for 3 hours with occasional shaking and then heating at 150°—200°C for about 3 hours to evaporate off the formic acid and unreacted formaldehyde and also to complete polymerization.

Test results of the characteristics of the adsorbent thus prepared will be shown below:

The ion adsorbent was filled into a stainless steel tube, 15 mm in inner diameter and 500 mm in length, and water was passed therethrough at a flow rate of 10 ml/min. while elevating the temperature of the ion adsorbent at a rate of about 1°C/min. The water was preheated to the same temperature as that of the ion adsorbent. The effluent water from the stainless steel tube after the treatment was cooled to room temperature in a cooler and withdrawn. The functional groups of the compounds in the effluent water were quantitatively determined and calculated in terms of oxine, and are plotted in Fig. 1 against the reaction temperature.

In Fig. 1, the characteristics of the adsorbent thus prepared according to the present invention are shown by mark "●" together with those (represented by mark "▲") of single (monomeric) oxine-impregnated activated carbon, which will be hereinafter referred to merely as "oxine-impregnated activated carbon" as a comparative example, and also together with those of the adsorbent of following Example 2, represented by mark "o". As is evident from Fig. 1, the oxine is gradually released from the oxine-deposited activated carbon above about 150°C, whereas the adsorbent of the present example does not undergo substantial release of oxine up to about 250°C.

Separately, the adsorbent of Example 1 was filled in a glass tube, 12 mm in inner diameter and 150 mm in length, and 500 ml of an aqueous solution containing 150 ppm of cobalt ions labelled with cobalt-58 (pH 8.9, 80°C) was passed through the glass tube at a flow rate of 4 ml/min., and then the adsorbent column in the glass tube was taken out in portions each equivalent to a column length of 1 cm to measure the radioactivity of the respective portions. The results are shown in Fig. 2 using the same symbols, together with the results for the comparative activated carbon represented by mark "x", comparative oxine-impregnated activated carbon and the adsorbent of following Example 2. As is clear from Fig. 2, adsorbents having a high cobalt-capturing ability have a high radioactivity near the flow inlet for the cobalt solution, and the radioactivity is gradually reduced towards the outlet. An adsorbent having a low capturing ability is rapidly saturated from the inlet towards the outlet with a small variation. It is also seen from Fig. 2 that even activated carbon has some cobalt-capturing ability, whereas the oxine-impregnated activated carbon has a drastically higher capturing ability. The present adsorbent has a slightly lower capturing ability than that of the oxine-impregnated activated carbon, but can be effectively used in practice.

The present adsorbent was subjected to further tests by thermogravimetric and differential thermal analysis, and the results are shown. In Fig. 3, together with those of comparative activated carbon, oxine-impregnated activated carbon, and the adsorbent of Example 2. Curves I represent the thermogravimetric results and Curves II the differential thermal analysis.

As is evident from Fig. 3, the oxine-impregnated activated carbon has lower temperatures for combustion start and combustion end than the activated carbon, and the present adsorbent can be still more readily combusted. The present adsorbents can attain considerable volume reduction in combustion.

The present adsorbent was further subjected to irradiation of $\gamma$-rays of $10^8$ roentgen and then its cobalt-capturing ability was measured. It was found that the change in this ability after the irradiation was within the experimental error, and thus there was no substantial deterioration in this ability.

Example 2

200 g of activated carbon prepared from coconut shells (disintegrated form of 24—42 mesh) was placed into an Erlenmeyer flask with ground stopper and 20 g of purified powder oxine was added thereto. The flask was gently shaken for about 10 minutes, and then left standing for about 3 hours. Then, 15 ml of an aqueous 37% formaldehyde solution was added and shaken to obtain a uniform mixture. Then, 210 ml of an aqueous 30% sodium hydroxide solution was added and gently mixed at 80°C for about 2 hours. Then, aging was carried out at 80°C for 4 hours with occasional shaking, and then the mixture was washed with about 500 ml of warm water, and then heated at 150°—200°C for about 3 hours to complete polymerization. Then, the mixture was washed with warm water at about 80°C until the pH of washing water was made less than 9.

Characteristics of the present adsorbent were measured under the same conditions as in Example 1, and the results are shown in Figs. 1—3 (already discussed.

As is clear from Fig. 1, the adsorbent of the present example undergoes no substantial release of oxine up to about 240°C, and is as satisfactory as that of Example 1.

It is also seen from Fig. 2 that the present adsorbent has a slightly lower cobalt capturing ability than that of Example 1, but the amount of oxine for the present adsorbent is a half of that for the adsorbent of Example 1, and thus the cobalt-capturing ability can be regarded as rather improved. The present adsorbent can be effectively used in practice.

As is evident from Fig. 3, the present adsorbent is substantially equal in thermal properties to the adsorbent of Example 1, and can be readily combusted.

The present adsorbent was further subjected to irradiation of $\gamma$-rays of $10^8$ roentgen and then its cobalt-capturing ability was measured. No substantial deterioration was found in this ability after the irradiation, as compared with that before the irradiation.

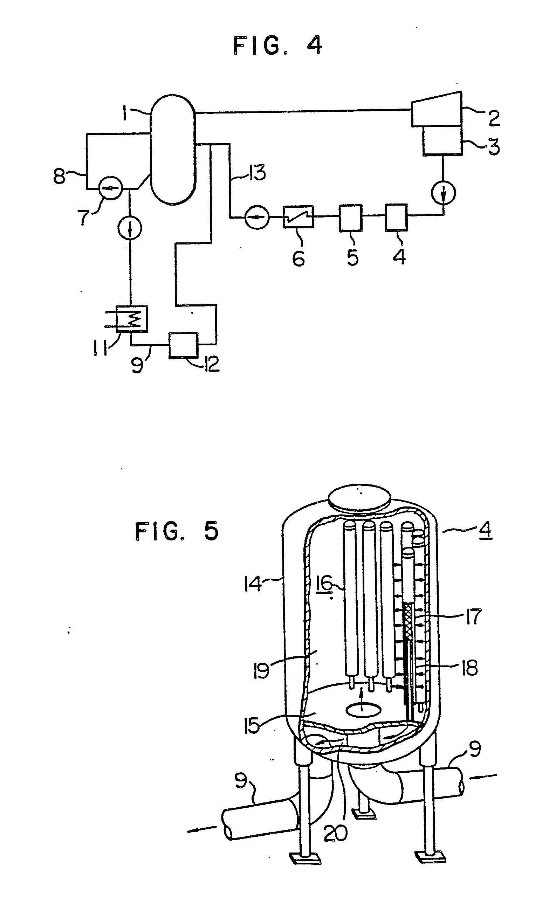

A boiling water type nuclear reactor using the present metal ion adsorbent will be described below, referring to Fig. 4. In a boiling water type nuclear reactor, steam generated in nuclear reactor pressure vessel *1* is fed to turbine *2* and then condensed in condenser *3*. The cooling water obtained by the condensation is returned to nuclear reactor pressure vessle *1* through first purifier *4*, second purifier *5* and feed water heater *6*. On the other hand, the cooling water (about 280°C) in nuclear reactor pressure vessel *1* is led to the core in nuclear reactor pressure vessel *1* through recycle piping *8* by driving recycle pump *7*. The cooling water passing through recycle piping 8 flows into nuclear reactor purification piping *9*, cooled to

about 250°C through non-regenerating heat exchanger *11,* and led to purifier *12.* The cooling water leaving purifier *12* is returned to nuclear reactor pressure vessel *1* through feedwater piping *13.* Second puifier *5* is a vessel filled with a mixture of granular cation exchange resin and anion exchange resin.

The structure of purifier *12* will be described in detail below, referring to Fig. 5. Puifier *12* is provided with a plurality of adsorbers *16* fixed to support plate *15* in vessel *14.* The adsorber *16* has an adsorption layer comprising a stainless steel cylindrical wiremesh *17* and a powder polymerized oxine-impregnated activated carbon prepared from disintegrated adsorbent of Example 2, and precoated onto the surface of the cylindrical wiremesh. The adsorption layer *18* is about 10 mm thick.

The structure of the first purifier *4* is the same as that of the purifier *12.*

Cooling water at about 250°C, which flows into space *19* of vessel *14* through the piping *9,* passes through the adsorption layer *18* from the surface of adsorption layer *18* into the cylindrical wiremesh *17,* and flows down within the cylindrical wiremesh into space 20. Then, it is discharged into the piping *9* at the downstream side. The cobalt ions in the cooling water are adsorbed onto the surface of the polymerized oxine-impregnated activated carbon during the passage through the adsoprtion layer *18.*

Thus, in the purification system of nuclear reactor coolant in a boiling water type nuclear reactor it is not necessary to provide a regenerating heat exchanger in contrast to the conventional system, and consequently the structure of purification system of nuclear reactor coolant can be considerably simplified. Furthermore, the cooling capacity of heat exchanger in the purification system of nuclear reactor coolant can be reduced, and thus the heat efficiency of a nuclear power plant can be elevated.

Thus, by virtue of the present invention, a high temperature coolant can be efficiently purified.

**Claims**

1. A process for preparing a metal ion adsorbent, which comprises adsorbing oxine or an oxine derivative onto activated carbon, characterised in that the oxine or its derivative on the surface of the activated carbon is subjected to polymerization.

2. A process according to claim 1 including hydroxymethylating the oxine or its derivative on the surface of the activated carbon, before subjecting the hydroxymethylated oxine or derivated to the polymerization.

3. A process according to claim 2 including dipping the activated carbon, after deposition thereon of the oxine or its derivative, into an aqueous aldehyde or aldehyde-source solution, and performing the hydroxymethylation of the oxine or its derivative in the presence of an acide or an alkali as a reaction promoter.

4. A process according to claim 3 wherein a phenol is also adsorbed onto the activated carbon, before the carbon is dipped into the aqueous aldehyde or aldehyde-source solution, the phenol being co-polymerized with the hydroxymethylated oxine or oxine-derivative in the polymerization or condensation step.

5. A process according to claim 1 including hydroxymethylating the oxine or its derivative before the resulting hydroxymethylated oxine or derivative is adsorbed onto the activated carbon.

6. A process according to claim 5 wherein a phenol is also adsorbed onto the activated carbon, the phenol being bound with the hydroxymethylated oxine or derivative on the surface of the activated carbon by copolymerization.

7. A metal ion adsorbent which comprises activated carbon and an oxine or oxine derivative thereon, characterised in that the oxine or derivative is in the form of a polymerization product of the oxine or derivative on the surface of the activated carbon.

8. A metal ion adsorbent according to claim 7 wherein said polymerization product is a copolymerisation product of oxine or its derivative and a phenol.

**Revendications**

1. Procédé pour préparer une substance adsorbant les ions métalliques, qui inclut l'adsorption d'oxine ou d'un dérivé de l'oxine sur du charbon activé, caractérisé en ce que l'oxine ou son dérivé située sur la surface du charbon activé est soumise à une polymérisation.

2. Procédé selon la revendication 1, incluant l'hydroxyméthylation de l'oxine ou de son dérivé sur la surface du charbon activé, avant de soumettre l'oxine ou son dérivé hydroxyméthylaté à la polymérisation.

3. Procédé selon la revendication 2, incluant, après le dépôt de l'oxine ou de son dérivé sur le charbon activé, l'immersion de ce charbon activé dans une solution d'aldéhyde ou de source d'aldéhyde aqueuse, est mise en oeuvre de l'hydroxyméthylation de l'oxine ou de son dérivé en présence d'un acide ou d'un alcali en tant qu'activateur de réaction.

4. Procédé selon la revendication 3, selon lequel un phénol est également adsorbé sur le charbon activé avant que le carbone soit immergé dans la solution d'aldéhyde ou de source d'aldéhyde aqueuse, le phénol étant copolyrimérisé avec l'oxine ou le dérivé d'oxine hydroxyméthylaté, lors de la phase de polymérisation ou de condensation.

5. Procédé selon la revendication 1, incluant l'hydroxyméthylation de l'oxine ou de son dérivé avant que l'oxine ou le dérivé d'oxine hydroxyméthylaté résultant soit adsorbée sur le charbon activé.

6. Procédé selon la revendication 5, selon lequel un phénol est également adsorbé sur le charbon activé, ce phénol étant lié à l'oxine ou son dérivé hydroxyméthylaté, sur la surface du charbon activé, par copolymérisation.

7. Substance adsorbant les ions métalliques, qui comportent du charbon activé et une oxine ou un dérivé d'oxine disposé sur ce carbone, caractérisé en ce que l'oxine ou son dérivé est présent sous la forme d'un produit de polymérisation de l'oxine ou de son dérivé sur la surface du carbone activé.

8. Substance adsorbant les ions métalliques selon la revendication 7, dans laquelle ledit premier produit de polymérisation est un produit de copolymérisation de l'oxine ou de son dérivé et d'un phénol.

**Patentansprüche**

1. Verfahren zur Herstellung eines Metallionen-Adsorbens, bei dem Oxin oder ein Oxinderivat an Aktivkohle adsorbiert wird, dadurch gekennzeichnet, daβ das Oxin oder dessen Derivat an der Oberfläche der Aktivkohle der Polymerisation unterworfen wird.

2. Verfahren nach Anspruch 1, bei dem das Oxin oder dessen Derivat an der Oberfläche der Aktivkohle hydroxymethyliert wird, bevor das hydroxymethylierte Oxin oder dessen Derivat der Polymerisation unterworfen wird.

3. Verfahren nach Anspruch 2, bei dem die Aktivkohle, bevor das Oxin oder dessen Derivat auf ihr abgeschieden wird, in eine wässrige Lösung eines Aldehyds oder einer Quelle für einen Aldehyd eingetaucht und die Hydroxymethylierung des Oxins oder dessen Derivats in Gegenwart einer Säure oder einer Alkalie als Reaktions-promoter durchgefürt wird.

4. Verfahren nach Anspruch 3, bei dem auβerdem ein Phenol an der Aktivkohle adsorbiert wird, bevor die Kohle in die wässrige Lösung des Aldehyds oder der Aldehyd-Quelle eingetaucht wird, wobei der Phenol in der Polymerisations- oder Kondensationsstufe mit dem hydroxymethylierten Oxin oder Oxinderivat copolymerisiert wird.

5. Verfahren nach Anspruch 1, bei dem das Oxin oder dessen Derivat hydroxymethyliert wird, bevor das gebildete hydroxymethylierte Oxin oder dessen Derivat an der Aktivkohle adsorbiert wird.

6. Verfahren nach Anspruch 5, bei dem auβerdem ein Phenol an der Aktivkohle adsorbiert wird, wobei das Phenol durch Copolymerisation mit dem hydroxymethylierten Oxin oder dessen Derivat an der Oberfläche der Aktivkohle gebunden wird.

7. Metallionen-Adsorbens, das Aktivkohle und auf dieser en Oxin oder Oxinderivat umfaβt, dadurch gekennzeichnet, daβ das Oxin oder dessen Derivat in Form eines Polymerisationsprodukts des Oxins oder dessen Derivats an der Oberfläche der Aktivkohle vorliegt.

8. Metallionen-Adsorbens nach Anspruch 7, wobei das Polymerisationsprodukt ein Copolymerisationsprodukt des Oxins oder dessen Derivats und eines Phenols ist.

FIG. 1

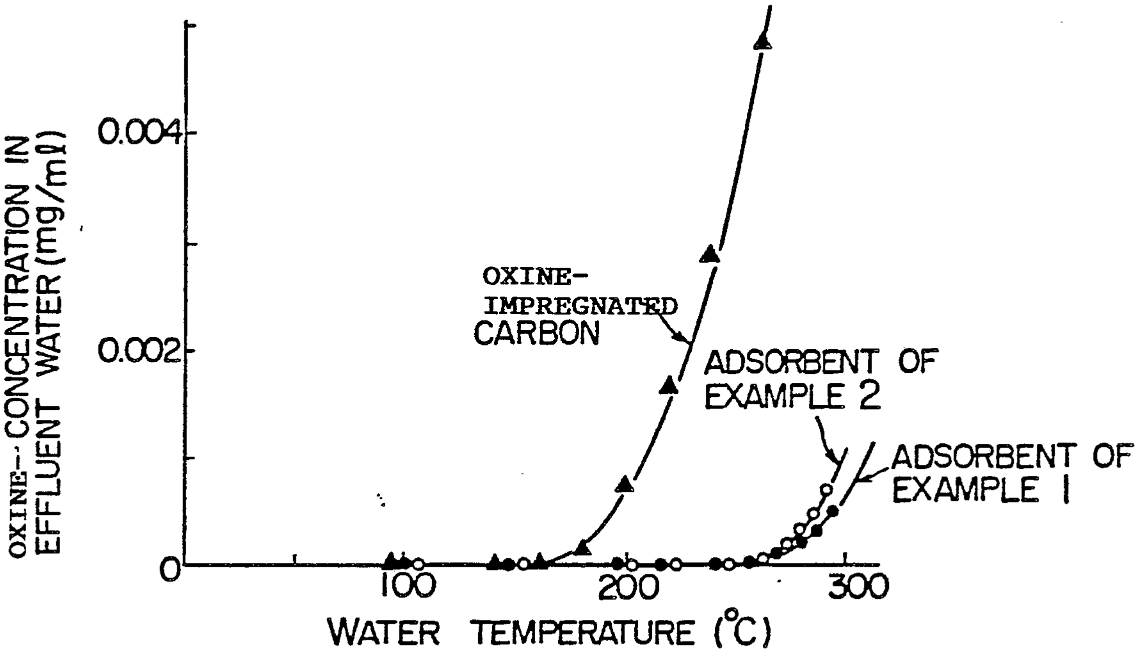
OXINE-CONCENTRATION IN EFFLUENT WATER (mg/ml)
0.004
0.002
0
100
200
300
WATER TEMPERATURE (°C)
OXINE-IMPREGNATED CARBON
ADSORBENT OF EXAMPLE 2
ADSORBENT OF EXAMPLE 1

FIG. 2

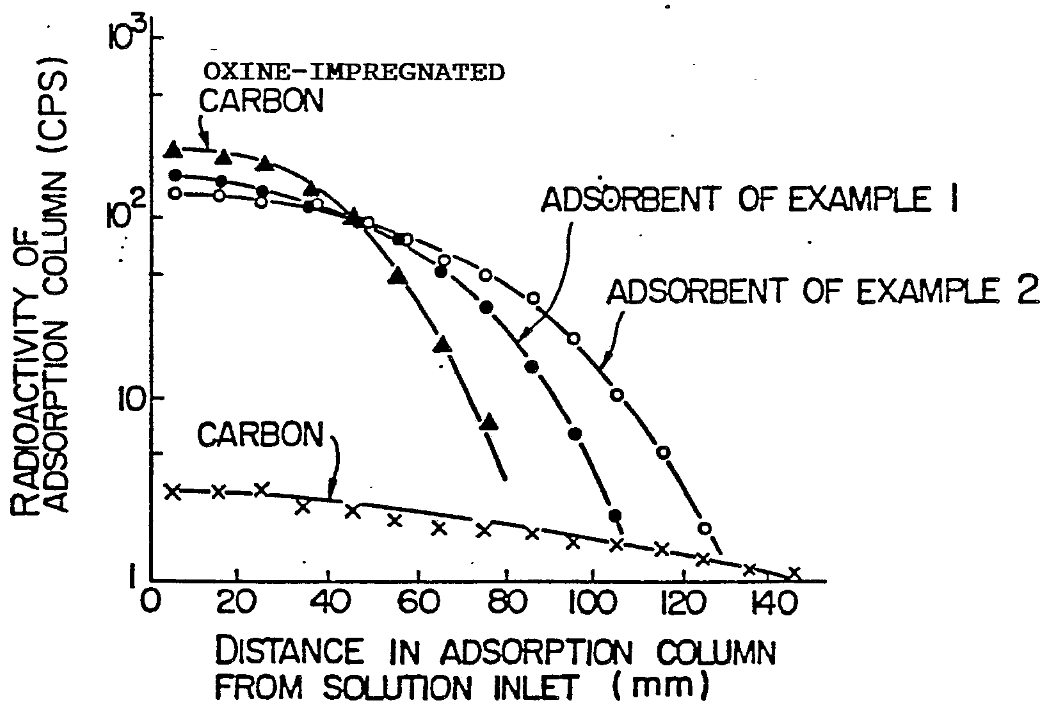
RADIOACTIVITY OF ADSORPTION COLUMN (CPS)
10³
10²
10
1
0
20
40
60
80
100
120
140
DISTANCE IN ADSORPTION COLUMN FROM SOLUTION INLET (mm)
OXINE-IMPREGNATED CARBON
ADSORBENT OF EXAMPLE 1
ADSORBENT OF EXAMPLE 2
CARBON

FIG. 3

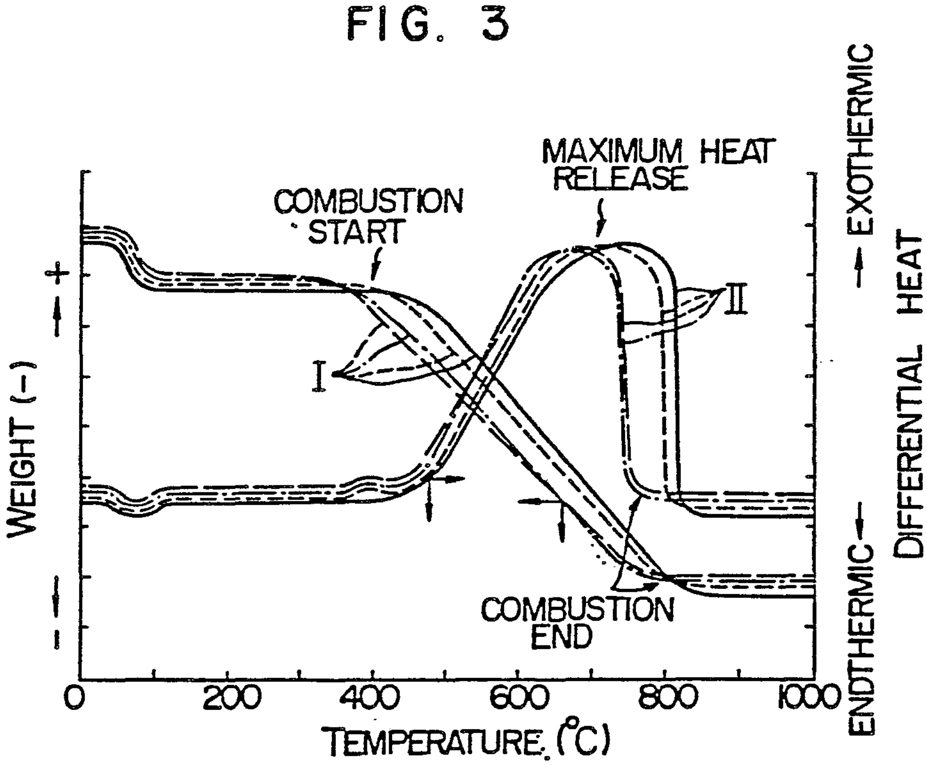


——— ACTIVATED CARBON
– – – – OXINE-IMPREGNATED ACTIVATED CARBON
—·— ADSORBENT OF EXAMPLE 1
—— ADSORBENT OF EXAMPLE 2

FIG. 4

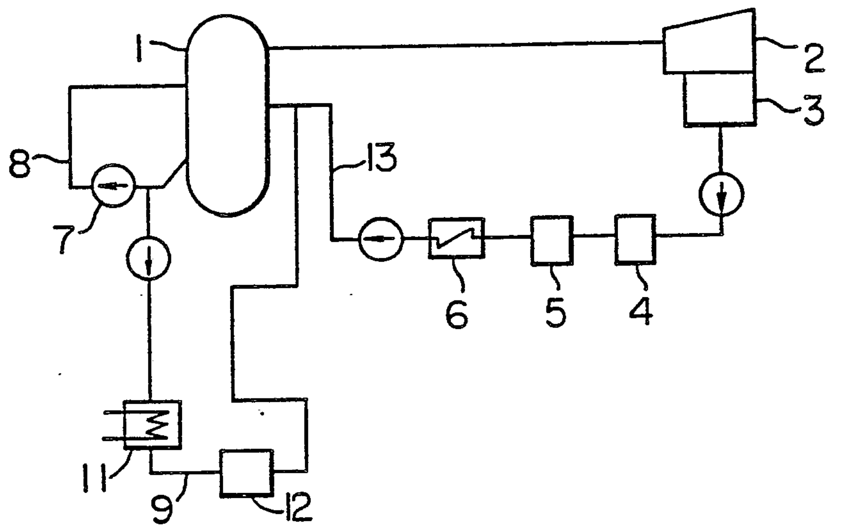


FIG. 5